# FASCICULE DE BREVET EUROPEEN

(11) **EP 2 071 138 B1**
(45) Date de publication et mention de la délivrance du brevet: **17.11.2010**
(21) Numéro de dépôt: 08171583.1
(22) Date de dépôt: 12.12.2008
(51) Int. Cl.: F01D 21/04, F01D 25/16

(54) **Dispositif de découplage d'un support de palier avec double centrage**
Abkopplungsvorrichtung eines Lagerträgers mit Doppelzentrierung
Device for uncoupling a bearing support having double centring

(30) Priorité: 14.12.2007 FR 0708704
(43) Date de publication de la demande: 17.06.2009
(73) Titulaire: SNECMA, 75015 Paris (FR)
(72) Inventeur: Decerle, Eric, Nicolas, 77176 Savigny Le Temple (FR); Duchatelle, Thierry, François, Maurice, 94000 Creteil (FR); Molinari, Olivier, Michaël, 77210 Avon (FR); Sanchez, Arnaud, 91800 Brunoy (FR)
(74) Mandataire: Bloch & Bonnétat

(56) Documents cités:
- EP-A- 1 308 602
- EP-A- 1 439 316
- CN-Y- 200 968 363
- FR-A- 2 752 024
- FR-A- 2 877 046
- FR-A- 2 888 621

## Description

La présente invention concerne un dispositif de découplage d'un support de palier d'arbre tournant dans une turbomachine. Un tel support de palier est susceptible de rompre sa liaison avec le stator de la turbomachine à l'apparition d'un balourd pour éviter une détérioration de la turbomachine.

Une turbomachine comporte, d'amont en aval dans le sens de l'écoulement des gaz, un compresseur, une chambre de combustion et une turbine. Le rôle du compresseur est d'accroître la pression de l'air fourni à la chambre de combustion. Le rôle de la turbine est d'assurer l'entraînement en rotation du compresseur en prélevant une partie de l'énergie de pression des gaz chauds sortant de la chambre de combustion et en la transformant en énergie mécanique.

Le compresseur et la turbine sont constitués d'un premier ensemble de pièces fixes constituant le stator et un second ensemble de pièces, susceptible d'être mis en rotation par rapport au stator, constituant le rotor.

Le rotor du compresseur et le rotor de la turbine forment un ensemble solidairement relié par un arbre tournant. La rotation du rotor par rapport au stator est rendue possible au moyen de paliers, un palier étant un organe mécanique supportant et guidant un rotor, en particulier l'arbre de ce rotor. Ce palier comporte une première partie fixée sur l'arbre rotor et une seconde partie fixée sur le stator par l'intermédiaire d'un support de palier. Un roulement est disposé entre les deux parties du palier autorisant ainsi la rotation d'une partie du palier par rapport à l'autre. Le roulement peut par exemple être de type à billes, à rouleaux cylindriques ou à rouleaux coniques.

Une turbomachine peut également être du type à « double-corps » ce qui signifie qu'elle comporte deux rotors agencés coaxialement, un palier autorisant la rotation relative entre ces deux rotors.

Une turbomachine peut également comporter une soufflante, constituant le premier étage du compresseur. La soufflante comporte des aubes de très grande taille, dites aubes de soufflante, qui ont pour effet de d'augmenter la masse et l'inertie du rotor.

En cas de rupture d'une aube de soufflante, un balourd est produit sur l'arbre supportant la soufflante. Un balourd est un phénomène de déséquilibre du rotor dont le centre de gravité ne se situe plus exactement sur l'axe de rotation comme il devrait l'être. Des charges cycliques et des vibrations importantes sont ainsi communiquées au stator de la turbomachine, par l'intermédiaire du support de palier, avec d'importants risques de détérioration pouvant mener à son autodestruction. Pour éviter la transmission de ces phénomènes indésirables au stator, il est nécessaire de découpler le support de palier, c'est-à-dire interrompre la transmission mécanique de la rotation, notamment en désolidarisant les deux parties formant le support de palier.

Le document FR 2877046 décrit une solution consistant à utiliser des vis fusibles pour la fixation d'une partie amont et d'une partie aval formant un support de palier. Ces vis fusibles, dont le fonctionnement est amplement décrit dans ce document, présentent une portion de section réduite susceptible de se rompre au-delà d'un effort de traction prédéterminé et ainsi de réaliser le découplage des deux parties constituant le support de palier.

La vis fusible de la figure 9 du document FR 2877046 traverse un orifice amont d'une partie amont et un orifice aval d'une partie aval d'un support de palier, la partie aval du support de palier faisant partie intégrante du carter. La tête de vis de la vis fusible est adjacente à l'orifice de la partie amont et est en contact avec cette partie amont selon un plan perpendiculaire à l'axe de l'orifice. La portion de la vis fusible traversant l'orifice est en contact avec l'intérieur de l'orifice par une portion de centrage. Lors de l'apparition d'un balourd, la partie amont et la partie aval se déplacent l'une par rapport à l'autre selon un mouvement relatif circulaire qui a pour effet de soumettre la vis fusible à des efforts de cisaillement, en raison du contact tangentiel autour de la vis fusible, pouvant conduire à la rupture non maîtrisée des vis fusibles. Or, ces vis fusibles sont étudiées pour des efforts en traction uniquement et ne tiennent pas compte des efforts en cisaillement. Il est par ailleurs difficile de concevoir une vis fusible tenant compte à la fois des efforts en traction et des efforts en cisaillement.

Le document EP1308602 décrit également un support de palier d'un turboréacteur, dans lequel un palier est monté avec un jeu vis-à-vis de la structure et dans lequel des vis sont fusibles en cisaillement pour permettre un appui du palier sur le support.

Le document FR2752024 décrit un support d'arbre cassant en cas de balourd.

La présente invention a pour objet une amélioration de la maîtrise de la fonction de découplage. Ce but est atteint par suppression des efforts de cisaillement pouvant apparaître sur une vis fusible dans un dispositif de découplage d'un support de palier. Ainsi, les vis fusibles ne deviennent sensibles qu'aux efforts de traction pour lesquelles elles ont été conçues. A cet effet, l'invention concerne un dispositif de découplage d'un support de palier dans une turbomachine, ledit support de palier comportant une partie amont et une partie aval comprenant respectivement une pluralité d'orifices amont et aval traversés successivement par des vis fusibles.

Selon l'invention, le dispositif de découplage de support de palier comporte, entre chaque orifice amont et la vis fusible le traversant, un jeu évitant tout contact entre l'orifice amont et la vis fusible. La partie amont et la partie aval du support de palier sont reliées entre elles et en contact par deux surfaces parallèles et de diamètres différents formant un moyen de double centrage, extérieur et intérieur. Avantageusement, ce jeu évite les efforts de cisaillement sur la vis fusible en cas de balourd.

Le moyen de double centrage peut par exemple être constitué par une rainure circulaire et une nervure circulaire de forme complémentaire. La fonction de centrage n'est donc plus supportée par les vis fusibles mais directement par les parties amont et aval du support de palier. Avantageusement, les vis fusibles ne sont désormais soumises qu'à des efforts de traction ce qui permet une meilleure maîtrise du découplage du support de palier.

D'autres caractéristiques et avantages de l'invention apparaîtront plus clairement et seront mieux comprises à la lumière de la description détaillée ci-dessous, à titre d'exemple non limitatif, en relation avec les figures suivantes qui représentent respectivement :
- figure 1, une vue en perspective d'un exemple de support de palier ;
- figure 2, une vue schématique en demi-coupe d'un premier exemple de réalisation du centrage du support de palier;
- figure 3, une vue schématique en demi-coupe axiale d'un deuxième exemple de réalisation du centrage du support de palier;
- figure 4, une vue schématique en coupe selon le plan A-A de la figure 2;
- figure 5, une vue schématique en coupe selon le plan B-B de la figure 3;
- figures 6 à 9, des vues schématiques en demi-coupe axiale de plusieurs exemples de double centrage du support de palier selon l'invention ; et

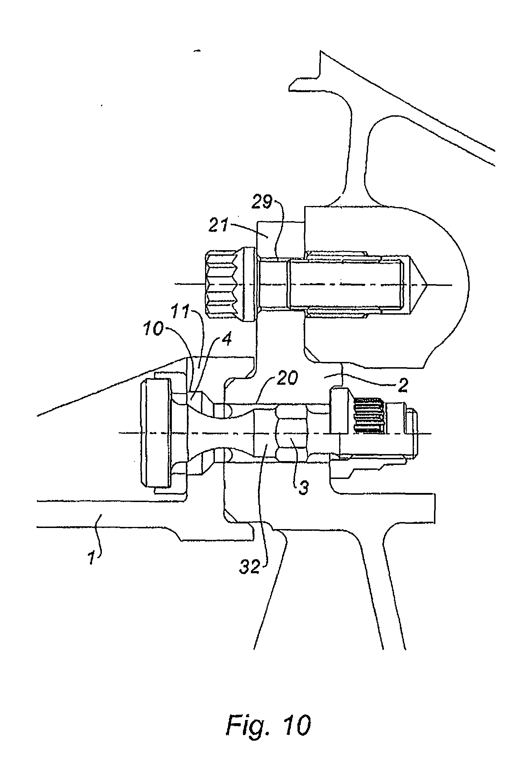

- figure 10, une vue schématique en coupe d'une vis fusible fixée sur un support de palier selon l'invention.

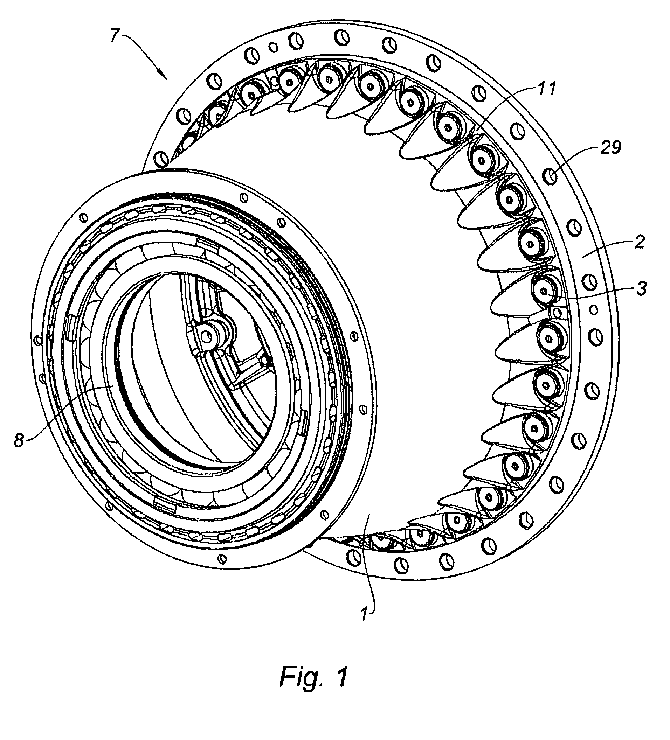

Un support de palier 7, tel que représenté sur la figure 1, possède une forme essentiellement tronconique et comporte une partie amont 1 et une partie aval 2. Une extrémité de la partie amont 1 du support de palier 7 est solidaire du palier 8 supportant et guidant le rotor de la turbomachine. L'autre extrémité de la partie amont 1 du support de palier 7 comporte une bride 11. La partie aval 2 du support de palier 7 possède la forme d'une bride 21 et est fixée solidairement au stator de la turbomachine au moyen de boulons de type non fusible (non représentés) traversant les orifices 29. La partie amont 1 et la partie aval 2 du support de palier 7 comportent respectivement au niveau de leurs brides 11 et 21 une pluralité d'orifices 10 et 20 circulaires et sont reliées entre elles au moyen d'une pluralité de vis fusibles 3 traversant successivement un orifice 10 de la partie amont 1 et un orifice 20 de la partie aval.

Selon une configuration non optimale, le centrage de la partie amont 1 avec la partie aval 2 du support de palier 7, c'est-à-dire leur alignement axial, peut-être assuré par une complémentarité de forme entre nervure circulaire 12 ou 23 et un épaulement circulaire 22 ou 13 sur l'une ou l'autre des parties amont 1 et aval 1 du support de palier 7. Au sens de la présente invention, un épaulement est un changement brusque de la section d'une pièce afin d'obtenir une surface d'appui.

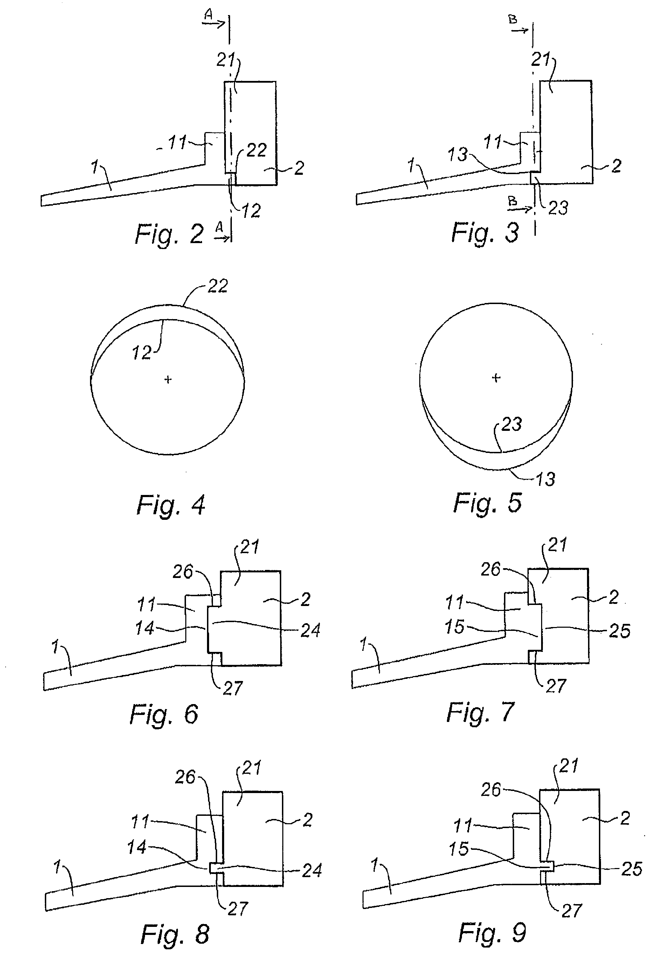

Dans l'exemple de la figure 2, représentant un unique centrage dit « extérieur », la nervure circulaire 12 est localisée sur la partie amont 1 et l'épaulement circulaire 22 est localisé sur la partie aval 2. En cas de balourd, on observe une déformation du support de palier par ovalisation. Dans ces conditions, le contact tangentiel entre la nervure circulaire 12 et l'épaulement circulaire 22 est perdu sur une partie de la circonférence, comme représenté sur la figure 4. Cet écart entre la nervure circulaire 12 et l'épaulement circulaire 22 provoque le cisaillement des vis fusibles 3.

De même, dans l'exemple de la figure 3, représentant un unique centrage dit « intérieur », l'épaulement circulaire 13 étant localisé sur la partie amont 1 et la nervure circulaire 23 étant localisée sur la partie aval 2, en cas de balourd, le contact tangentiel entre l'épaulement circulaire 13 et la nervure circulaire 23 est perdu sur une partie de la circonférence, comme représenté sur la figure 5. Cet écart entre l'épaulement circulaire 13 et la nervure circulaire 23 provoque également le cisaillement des vis fusibles 3.

Cependant, ce cisaillement est beaucoup moins important que dans le cas de la figure 1 du document FR 2877046, appartenant à l'art antérieur, la fonction de centrage est uniquement assurée par les vis fusibles, ce qui provoque un cisaillement encore plus important.

Dans ces trois exemples, la maîtrise de l'effort de rupture en traction de des vis fusibles est susceptible d'être perturbée par des efforts en cisaillement.

Pour atténuer, voire supprimer, les efforts de cisaillement sur les vis fusibles 3, une première partie de la solution proposée par l'invention consiste à remplacer les moyens de centrage extérieur 12 et 22 ou intérieur 13 et 23, qui sont des moyens de centrage unique, par un moyen dit de « double centrage ».

Le moyen de double centrage, 14 et 24 ou 15 et 25, est constitué par une rainure circulaire 14 ou 25 et une nervure circulaire 15 ou 24 de forme complémentaire. La rainure circulaire 14 ou 25 et la nervure circulaire 15 ou 24 sont en contact par leurs flancs 26 et 27 offrant deux surfaces de contact parallèles. Un « double centrage » permet ainsi le centrage au moyen de ces deux surfaces parallèles tandis qu'un moyen de centrage unique tel que représenté sur les figures 2 et 3 n'offre qu'une seule surface de contact pour le centrage.

Selon un premier mode de réalisation de l'invention, représenté sur la figure 6, la rainure circulaire 14 est localisée sur la partie amont 1 et la nervure circulaire 24 est localisée sur la partie aval 2. Dans cette première variante de ce premier mode de réalisation, la rainure circulaire 14 et la nervure circulaire 24 de forme complémentaire sont larges. Dans une deuxième variante de ce premier mode de réalisation, la rainure circulaire 14 et la nervure circulaire 24 de forme complémentaire sont étroites, comme représenté à la figure 8.

Selon un deuxième mode de réalisation de l'invention, représenté sur la figure 7, la nervure circulaire 15 est localisée sur la partie amont 1 et la rainure circulaire 25 est localisée sur la partie aval 2. Dans cette première variante de ce deuxième mode de réalisation, la nervure circulaire 15 et rainure circulaire 25 de forme complémentaire sont larges. Dans une deuxième variante de ce deuxième mode de réalisation, la nervure circulaire 15 et rainure circulaire 25 de forme complémentaire sont étroites, comme représenté à la figure 9.

Dans tous les modes et variantes présentés ci-dessus, la coopération entre une rainure 14 ou 25 et nervure 15 ou 24 de forme complémentaire permet d'atténuer, voire de supprimer, la déformation par ovalisation du support de palier 5 en maintenant un contact permanent entre les flancs 26 et 27 de la rainure circulaire 14 ou 25 et de la nervure circulaire 15 ou 24.

Pour atténuer, voire supprimer, davantage les efforts de cisaillement sur les vis fusibles 3, une deuxième partie de la solution proposée par l'invention consiste à supprimer tout contact entre chaque orifice amont 10 et la vis fusible 3 le traversant. Ainsi, comme un déplacement de la partie amont 10 du support de palier 7 ne peut plus entraîner une vis fusible par un contact tangentiel autour de la vis fusible 3, ces vis fusibles 3 ne sont désormais soumises qu'à des efforts de traction ce qui permet une meilleure maîtrise du découplage du support de palier 7.

La suppression du contact entre chaque orifice amont 10 et la vis fusible 3 le traversant peut être réalisée en prévoyant un jeu 4 entre la vis fusible 3 et l'orifice amont 10 dans lequel elle est logée. Plus précisément, le jeu 4 doit être tel qu'il ne peut y avoir de contact entre la surface intérieure de l'orifice 10 et la tige 32 de la vis fusible 3.

Le jeu 4 peut être formé par un chambrage circulaire réalisé dans l'orifice amont 10. Un chambrage étant, au sens de la présente invention un évidement réalisé dans une pièce. Le chambrage circulaire possède un diamètre supérieur au diamètre de l'orifice amont 10, ce qui permet de continuer à utiliser des vis fusibles 3 de l'art antérieur possédant une portion de centrage, laquelle est référencée 19 sur la figure 9 du document FR 2877046. Même si cette portion de centrage n'a plus d'utilité dans le cadre de l'invention, il reste tout de même avantageux d'utiliser ces vis fusibles 3 standards dont les caractéristiques, notamment en terme d'effort de rupture en traction, sont bien connues et maîtrisées.

Le concept inventif général concerne également une turbomachine comportant un dispositif de découplage d'un support de palier selon l'invention.

## Revendications

1. Dispositif de découplage d'un support de palier (7) dans une turbomachine, ledit support de palier (7) comportant une partie amont (1) et une partie aval (2) comprenant respectivement une pluralité d'orifices amont (10) et aval (20) traversés par des vis fusibles (3), ledit support de palier (7) comportant, entre chaque orifice amont (10) et la vis fusible (3) le traversant, un jeu (4) évitant tout contact entre l'orifice amont (10) et la vis fusible (3), **caractérisé en ce que** la partie amont (1) et la partie aval (2) du support de palier (7) sont reliées entre elles et en contact par deux surfaces (26, 27) parallèles et de diamètres différents, lesdites surfaces (26, 27) formant un moyen de centrage extérieur et un moyen de centrage intérieur.

2. Dispositif de découplage d'un support de palier (7) selon la revendication 1 dont le jeu (4) est formé par un chambrage circulaire réalisé dans l'orifice amont (10).

3. Dispositif de découplage d'un support de palier (7) selon l'une des revendications 1 ou 2 dont les surfaces formant moyens de centrage extérieur et intérieur sont les flancs (26, 27) d'une rainure circulaire (14, 25) et d'une nervure circulaire (15, 24) de forme complémentaire.

4. Dispositif de découplage d'un support de palier (7) selon la revendication 3 dont la rainure circulaire (14) est localisée sur la partie amont (1) et la nervure circulaire (24) est localisée sur la partie aval (2).

5. Dispositif de découplage d'un support de palier (7) selon la revendication 3 dont la rainure circulaire (25) est localisée sur la partie aval (2) et la nervure circulaire (15) est localisée sur la partie amont (1).

6. Turbomachine comprenant un dispositif de découplage d'un support de palier selon l'une des revendications précédentes.

## Claims

1. Device for uncoupling a bearing support (7) in a turbomachine, said bearing support (7) comprising an upstream part (1) and a downstream part (2) comprising respectively a plurality of upstream (10) and downstream (20) orifices through which fusible screws (3) pass, said bearing support (7) comprising, between each upstream orifice (10) and the fusible screw (3) passing through it, a clearance (4) preventing any contact between the upstream orifice (10) and the fusible screw (3), **characterised in that** the upstream part (1) and the downstream part (2) of the bearing support (7) are connected together and in contact through two parallel surfaces (26, 27) with different diameters, said surfaces (26, 27) forming an external centring means and an internal centring means.

2. Device for uncoupling a bearing support (7) according to claim 1, the clearance (4) of which is formed by a circular recess produced in the upstream orifice (10).

3. Device for uncoupling a bearing support (7) according to one of claims 1 or 2, wherein the surfaces forming external and internal centring means are the sides (26, 27) of a circular groove (14, 25) and of a circular rib (15, 24) of complementary shape.

4. Device for uncoupling a bearing support (7) according to claim 3, wherein the circular groove (14) is located on the upstream part (1) and the circular rib (24) is located on the downstream part (2).

5. Device for uncoupling a bearing support (7) according to claim 3, wherein the circular groove (25) is located on the downstream part (2) and the circular rib (14) is located on the upstream part (1).

6. Turbomachine comprising a device for uncoupling a bearing support according to one of the preceding claims.

## Patentansprüche

1. Abkopplungsvorrichtung eines Lagerträgers (7) in einer Turbomaschine, wobei der Lagerträger (7) ein Stromaufwärtsteil (1) und ein Stromabwärtsteil (2) umfasst, die jeweils mehrere Stromaufwärts- (10) und Stromabwärtsöffnungen (20), die von Sicherungsschrauben (3) durchquert werden, enthalten, wobei der Lagerträger (7) zwischen jeder Stromaufwärtsöffnung (10) und der ihn durchquerenden Sicherungsschraube (3) ein Spiel (4) umfasst, das jeden Kontakt zwischen der Stromaufwärtsöffnung (10) und der Sicherungsschraube (3) verhindert, **dadurch gekennzeichnet, dass** das Stromaufwärtsteil (1) und das Stromabwärtsteil (2) des Lagerträgers (7) durch zwei Flächen (26, 27), die parallel sind und verschiedene Durchmesser aufweisen, miteinander verbunden sind und in Kontakt zueinander stehen, wobei die Flächen (26, 27) ein Außenzentriermittel und ein Innenzentriermittel bilden.

2. Abkopplungsvorrichtung eines Lagerträgers (7) nach Anspruch 1 deren Spiel (4) durch eine kreisförmige Senkung, die in der Stromaufwärtsöffnung (10) realisiert ist, gebildet wird.

3. Abkopplungsvorrichtung eines Lagerträgers (7) nach einem der Ansprüche 1 oder 2, deren Flächen, die Außen- und Innenzentriermittel bilden, die Flanken (26, 27) einer kreisförmigen Nut (14, 25) und einer kreisförmigen Rippe (15, 24) komplementärer Form sind.

4. Abkopplungsvorrichtung eines Lagerträgers (7) nach Anspruch 3, von der die kreisförmige Nut (14) auf dem Stromaufwärtsteil (1) untergebracht ist und die kreisförmige Rippe (24) auf dem Stromabwärtsteil (2) untergebracht ist.

5. Abkopplungsvorrichtung eines Lagerträgers (7) nach Anspruch 3, von der die kreisförmige Nut (25) auf dem Stromabwärtsteil (2) untergebracht ist und die kreisförmige Rippe (15) auf dem Stromaufwärtsteil (1) untergebracht ist.

6. Turbomaschine umfassend eine Abkopplungsvorrichtung eines Lagerträgers nach einem der vorhergehenden Ansprüche.
